(19) Europäisches Patentamt
European Patent Office
Office européen des brevets

(11) **EP 4 147 102 B1**

(12) **EUROPÄISCHE PATENTSCHRIFT**

(45) Veröffentlichungstag und Bekanntmachung des Hinweises auf die Patenterteilung:
**03.04.2024 Patentblatt 2024/14**

(21) Anmeldenummer: **21746363.7**

(22) Anmeldetag: **07.07.2021**

(51) Internationale Patentklassifikation (IPC):
**G05B 19/416** *(2006.01)* **G05B 19/41** *(2006.01)*

(52) Gemeinsame Patentklassifikation (CPC):
**G05B 19/416;** G05B 19/41; G05B 2219/43058; G05B 2219/43065; G05B 2219/43203

(86) Internationale Anmeldenummer:
**PCT/EP2021/068858**

(87) Internationale Veröffentlichungsnummer:
**WO 2022/033777 (17.02.2022 Gazette 2022/07)**

(54) **BETREIBEN EINER WENIGSTENS ZWEIACHSIGEN WERKZEUGMASCHINE**

OPERATION OF A MACHINE TOOL WITH AT LEAST TWO AXES

FONCTIONNEMENT D'UNE MACHINE-OUTIL AU MOINS À DEUX AXES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2020 EP 20190965**

(43) Veröffentlichungstag der Anmeldung:
**15.03.2023 Patentblatt 2023/11**

(73) Patentinhaber: **Siemens Aktiengesellschaft 80333 München (DE)**

(72) Erfinder:
• **ALKAFAFI, Loay 91058 Erlangen (DE)**

• **KREILOS, Tobias 71106 Magstadt (DE)**
• **SPIELMANN, Ralf 70569 Stuttgart (DE)**

(74) Vertreter: **Siemens Patent Attorneys Postfach 22 16 34 80506 München (DE)**

(56) Entgegenhaltungen:
**EP-A1- 3 623 887 WO-A1-2008/125656 DE-A1-102006 030 177**

**Beschreibung**

Die vorliegende Erfindung betrifft ein Verfahren zum Betreiben einer wenigstens zweiachsigen Werkzeugmaschine, wobei eine geometrische Beschreibung einer Bahn vorgegeben wird und eine Vorschubbewegung gemäß der Bahn durch wenigstens abschnittsweise gleichzeitige Bewegung einer ersten Achse und einer zweiten Achse der Werkzeugmaschine ausgeführt wird. Die Erfindung betrifft ferner ein Steuerungssystem für eine wenigstens zweiachsige Werkzeugmaschine, eine Werkzeugmaschine, ein Computerprogrammprodukt sowie ein computerlesbares Speichermedium.

Bekannte Werkzeugmaschinen werden als sogenannte Universalmaschinen entworfen, gebaut und ausgeliefert. Dies bedeutet, dass alle gängigen Steuerungsfunktionen in Betrieb genommen sind, sodass diese für den universellen Einsatz zur Verfügung stehen. Unter welchen Bedingungen und zu welchen Zwecken die Werkzeugmaschine tatsächlich eingesetzt wird, beispielsweise welche Teile damit gefertigt werden und wie die Werkzeugmaschine belastet wird, wird bei der Auslegung der Steuerung nicht berücksichtigt. Dementsprechend wird auch die Parametrierung der Steuerung der Werkzeugmaschine, beispielsweise hinsichtlich Einstellungen der Achsdynamik, so durchgeführt, dass der Einsatz der Werkzeugmaschine möglichst stabil und robust möglich ist.

Aus der WO 2008/125656 A1 sind ein Verfahren und eine Einrichtung zur Bewegungsführung eines bewegbaren Maschinenelements einer numerisch gesteuerten Maschine bekannt, wobei eine Bewegungsbahn des Maschinenelements in aufeinanderfolgende Bewegungsabschnitte aufgelöst ist, wobei anhand von vorgegebenen Restriktionen von Maschinenachsen eine maximal mögliche Bahngeschwindigkeit, eine maximal mögliche Bahnbeschleunigung und ein maximal möglicher Bahnruck gegeben sind, wobei die lokalen Minima der maximal möglichen Bahngeschwindigkeit bestimmt werden, wobei für jedes lokale Minimum jeweils ein zugehöriges links- und rechtsseitiges Bahngeschwindigkeitssegment bestimmt wird, wobei die Bahngeschwindigkeit im Wesentlichen durch das untere Niveau der Unstetigkeitssprungstellen der maximal möglichen Bahngeschwindigkeit verläuft und bei ansteigendem Verlauf der maximal möglichen Bahngeschwindigkeit das untere Niveau der Unstetigkeitssprungstellen vor den jeweiligen Unstetigkeitssprungstellen nicht erreicht.

Aus der DE 102006030177 A1 ist ein Verfahren zum Betreiben einer Werkzeugmaschine bekannt, bei dem ein Werkzeug der Werkzeugmaschine in einem Verfahrbereich entlang von in einem Raumkoordinatensystem beschreibbaren Bahnkurven bewegbar ist, wobei die Bahnkurven mittels einer von einer zeitabhängigen Kurvenparameterfunktion abhängigen parametrisierten Kurve beschreibbar sind und wobei die Kurvenparameterfunktion als wenigstens quadratisches Polynom darstellbar ist.

Aus der EP 3623887 A1 ist eine Maschine bekannt, die eine Anzahl von lagegeregelten Achsen aufweist, die in ihrer Gesamtheit eine Verfahrbewegung zweier Elemente der Maschine relativ zueinander bewirken. Eine Steuereinrichtung steuert die Achsen der Maschine derart an, dass die Elemente relativ zueinander sequenziell nacheinander Bahnabschnitte mit für die Bahnabschnitte definierten Geschwindigkeitsverläufen und dadurch definierten Beschleunigungsverläufen abfährt. Die Bahnabschnitte weisen jeweils einen Anfang und ein Ende auf, wobei das Ende und der Anfang unmittelbar nachfolgender Bahnabschnitte sich in der Lage mindestens einer Achse unterscheiden. Die Steuereinrichtung ermittelt für die Achsen eine zeitoptimale, in Ort (x), Geschwindigkeit (v) und Beschleunigung (a) stetige und in Geschwindigkeit (v), Beschleunigung (a) und Ruck (r) begrenzte Bewegungsführung vom Ende des einen zum Anfang des nachfolgenden Bahnabschnitts. Die Ermittlung erfolgt derart, dass die Bewegung der Elemente relativ zu einander am Ende des einen Bahnabschnitts stetig in Ort (x), Geschwindigkeit (v) und Beschleunigung (a) in die ermittelte Bewegungsführung übergeht und die Bewegungsführung am Anfang des anderen Bahnabschnitts stetig in Ort (x), Geschwindigkeit (v) und Beschleunigung (a) in den anderen Bahnabschnitt übergeht.

Durch die robuste Parametrierung der Steuerung kann eine Universalwerkzeugmaschine viele verschiedene Werkstücke in mehr oder weniger annehmbarer Bearbeitungszeit fertigen. Eine solche robuste Parametrierung hat jedoch den Nachteil, dass stets Kompromisse eingegangen werden müssen. So sind bei unterschiedlichen Werkstücken unterschiedliche Anforderungen hinsichtlich der erforderlichen Maßgenauigkeit, Bearbeitungszeit oder Oberflächenqualität und so weiter möglich. Durch die robuste Parametrierung müssen jedoch bei all diesen Zielsetzungen Abstriche gemacht werden, um insgesamt eine universelle Einsetzbarkeit sicherzustellen. In der Konsequenz führt dies zu Einbußen in der Produktivität in Form von längeren Bearbeitungszeiten, zu reduzierter Oberflächenqualität und/oder geringerer erzielbarer Genauigkeit.

Vor diesem Hintergrund ist es eine Aufgabe der vorliegenden Erfindung, ein verbessertes Konzept zum Betreiben einer wenigstens zweiachsigen Werkzeugmaschine anzugeben, durch das die individuellen Anforderungen an Produktivität und/oder Qualität besser berücksichtigt werden können.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen und nebengeordneten Ansprüche.

Das verbesserte Konzept beruht auf der Idee, die Parametrierung der Steuerung einer Werkzeugmaschine wenigstens zum Teil abhängig von der konkret, beispielsweise anhand eines Teileprogramms, vorgegebenen Bahn festzulegen, indem wenigstens ein Maximalwert für einen kinematischen Parameter der Vorschubbewegung abhängig

von der geometrischen Beschreibung der Bahn festgelegt wird.

**[0010]** Gemäß dem verbesserten Konzept wird ein Verfahren zum Betreiben einer wenigstens zweiachsigen Werkzeugmaschine angegeben, wobei eine geometrische Beschreibung einer Bahn vorgegeben wird und eine Vorschubbewegung gemäß der Bahn durch wenigstens abschnittsweise gleichzeitige Bewegung einer ersten Achse und einer zweiten Achse der Werkzeugmaschine ausgeführt wird. Mittels einer Steuereinheit der Werkzeugmaschine wird ein erster Maximalwert für einen ersten kinematischen Parameter betreffend die Vorschubbewegung entlang eines Abschnitts der Bahn abhängig von der geometrischen Beschreibung festgelegt. Die Vorschubbewegung wird entlang des Abschnitts mittels der Steuereinheit unter Berücksichtigung des ersten Maximalwerts geplant und die erste Achse und die zweite Achse werden mittels der Steuereinheit angesteuert, um die Vorschubbewegung gemäß der geplanten Bewegung entlang des Abschnitts auszuführen.

**[0011]** Die Bahn ist dabei durch die geometrische Beschreibung festgelegt, also insbesondere durch Punkte im n-dimensionalen Parameterraum und gegebenenfalls interpolierte Abschnitte zwischen den Punkten, wobei n der Gesamtanzahl der Achsen entspricht. Im Falle einer Werkzeugmaschine mit drei Linearachsen ist n beispielsweise gleich drei, bei zusätzlich drei Rotationsachsen wäre n gleich sechs und so weiter. Insbesondere beinhaltet die Bahn keine Vorgaben bezüglich einer tatsächlichen Bahngeschwindigkeit, einer tatsächlichen Bahnbeschleunigung, eines tatsächlichen Bahnrucks und so weiter. Die Bahn kann jedoch Beschränkungen für diese Werte beinhalten.

**[0012]** Bei der Bahn kann es sich um eine Bahn für ein Werkzeug der Werkzeugmaschine oder für ein Werkstück handeln. Die Vorschubbewegung entspricht insbesondere einer Bewegung des Werkzeugs relativ zu dem Werkstück. Die Vorschubbewegung kann also durch Bewegung des Werkzeugs bei ortsfestem Werkstück erfolgen, durch Bewegung des Werkstücks bei ortsfestem Werkzeug oder durch eine Kombination aus beiden Möglichkeiten. Der Begriff der ortsfest kann dabei derart verstanden werden, dass in einem mit der Werkzeugmaschine oder einem Rahmen der Werkzeugmaschine fest verbundenen Koordinatensystem keine Bewegung stattfindet.

**[0013]** Die geometrische Beschreibung der Bahn kann beispielsweise in Form eines Teileprogramms, insbesondere eines NC-Teileprogramms oder eines CNC-Teileprogramms, vorgegeben werden, indem das Teileprogramm auf einer Speichereinheit der Werkzeugmaschine oder der Steuereinheit gespeichert wird.

**[0014]** Bei der ersten und der zweiten Achse kann es sich grundsätzlich jeweils um Dreh- oder Linearachsen handeln. In bevorzugten Ausführungsformen handelt es sich bei der ersten und der zweiten Achse jeweils um eine Linearachse.

**[0015]** Unter einem kinematischen Parameter kann insbesondere eine einfache oder mehrfache zeitliche Ableitung des Bahnorts verstanden werden, also eine Bahngeschwindigkeit, eine Bahnbeschleunigung, ein Bahnruck und so weiter. Insbesondere ist ein kinematischer Parameter nach diesem Verständnis gegeben durch $d^ns/dt^n$, wobei n für eine ganze Zahl größer oder gleich 1 steht.

**[0016]** Ein Maximalwert für einen ersten kinematischen Parameter kann insbesondere als Maximalwert für einen Betrag des kinematischen Parameters angesehen werden. Um beispielsweise den ersten Maximalwert abhängig von der geometrischen Beschreibung festzulegen, kann die Steuereinheit insbesondere eine lokale Steigung oder eine lokale Krümmung der Bahn und so weiter in dem Abschnitt bestimmen und den ersten Maximalwert abhängig davon festlegen. Die lokale Steigung, Krümmung und so weiter können dabei in dem Teileprogramm enthalten sein oder mittels der Steuereinheit basierend auf der geometrischen Beschreibung berechnet werden.

**[0017]** Das Planen der Vorschubbewegung entlang des Abschnitts beinhaltet beispielsweise die Festlegung aller erforderlichen kinematischen Achsparameter, also Achsgeschwindigkeit, Achsbeschleunigung, Achsruck und so weiter für jede der einzelnen Achsen entlang des Abschnitts, beziehungsweise die Festlegung entsprechender Steuerungsparameter oder Stromstärken für die entsprechenden Achsantriebe der Werkzeugmaschine. Die Planung der Vorschubbewegung beinhaltet dabei insbesondere das Festlegen eines oder mehrerer konkreter Werte für den ersten kinematischen Parameter unter Berücksichtigung des ersten Maximalwerts, also derart, dass der erste Maximalwert durch den konkreten Wert des ersten kinematischen Parameters entlang des Abschnitts nicht überschritten wird.

**[0018]** Anders als bei universell parametrisierten Werkzeugmaschinen oder Steuerungen für Werkzeugmaschinen wird gemäß dem verbesserten Konzept also der erste Maximalwert abhängig von der konkret vorgegebenen Bahn festgelegt. Der erste Maximalwert und dementsprechend der erste kinetische Parameter können dadurch für die Bahn beziehungsweise für jeden Abschnitt der Bahn optimal und individuell angepasst festgelegt werden. Dadurch müssen bei der Festlegung des ersten Maximalwerts beziehungsweise des ersten kinematischen Parameters weniger oder keine Kompromisse eingegangen werden, die auf Kosten einer angestrebten Fertigungsqualität oder Durchlaufgeschwindigkeit gehen, im konkreten Fall jedoch keine Vorteile bieten.

**[0019]** Liegt beispielsweise der Fokus auf einer möglichst kurzen Durchlaufzeit, so kann der erste Maximalwert anders gewählt werden, als wenn der Fokus auf einer maximalen Genauigkeit, beispielsweise auf einem minimalen Überschwingen einer Achse, liegt. Die Festlegung des ersten Maximalwerts kann dabei für unterschiedliche Abschnitte der Bahn unterschiedlich erfolgen, sodass eine individuell angepasste Bahnplanung und damit eine Steigerung der Produktivität und/oder Qualität des gefertigten Werkstücks oder einer mittels der Werkzeugmaschine durchgeführten Vermessung eines Werkstücks erzielt werden kann.

**[0020]** Es wird darauf hingewiesen, dass der wie beschrieben anhand der geometrischen Beschreibung der Bahn

festgelegte erste Maximalwert nicht in jedem Fall voll ausgenutzt werden kann, da sich gegebenenfalls durch weitere Achsen oder weitere kinematische Parameter Beschränkungen ergeben können. In solchen Fällen wird die Planung der Vorschubbewegung jedoch dennoch unter Berücksichtigung des ersten Maximalwerts durchgeführt, in dem Sinne, als dass der erste Maximalwert nicht überschritten werden darf. Mit anderen Worten können sich für den ersten kinematischen Parameter weitere Maximalwerte ergeben, die auf andere Weise oder durch andere Randbedingungen vorgegeben sind. Durch die Planung der Vorschubbewegung wird dabei sichergestellt, dass der erste kinematische Parameter stets kleiner ist als der kleinste Maximalwert für den ersten kinematischen Parameter. Entsprechendes gilt auch für im Folgenden diskutierte weitere kinematische Parameter.

In verschiedenen Ausführungsformen des Verfahrens können die Verfahrensschritte des Festlegens des ersten kinematischen Parameters und der Planung der Vorschubbewegung können beispielsweise offline, also vor Beginn des operativen Einsatzes der Werkzeugmaschine, insbesondere vor Beginn der Vorschubbewegung, durchgeführt werden. Die offline durchgeführten Schritte können beispielsweise mittels einer ersten Unterrecheneinheit der Steuereinheit durchgeführt werden, während die tatsächliche Ansteuerung der Achsen mittels einer zweiten Unterrecheneinheit der Steuereinheit durchgeführt werden kann. Die Unterrecheneinheiten können dabei insbesondere unabhängig voneinander und/oder räumlich voneinander getrennt ausgestaltet sein und drahtlos oder drahtgebunden miteinander kommunizieren, so dass insbesondere die erste Unterrecheneinheit ein Ergebnis der Planung der Vorschubbewegung an die zweite Unterrecheneinheit übermitteln kann.

Gemäß zumindest einer Ausführungsform wird mittels der Steuereinheit ein weiterer erster Maximalwert für den ersten kinematischen Parameter betreffend die Vorschubbewegung entlang eines weiteren Abschnitts der Bahn abhängig von der geometrischen Beschreibung festgelegt. Die Vorschubbewegung entlang des weiteren Abschnitts wird mittels der Steuereinheit unter Berücksichtigung des Weiteren ersten Maximalwerts geplant. Die erste Achse und die zweite Achse werden mittels der Steuereinheit angesteuert, um die Vorschubbewegung gemäß der geplanten Bewegung entlang des weiteren Abschnitts auszuführen.

Der erste Maximalwert betreffend den Abschnitt und der weitere erste Maximalwert betreffend den weiteren Abschnitt sind dabei im Allgemeinen voneinander verschieden. Dementsprechend kann auch die Planung der Vorschubbewegung betreffend den ersten kinematischen Parameter in dem Abschnitt von der Planung für den weiteren Abschnitt abweichen. Dadurch kann auch im Rahmen der Fertigung eines einzigen Werkstücks oder der Vermessung eines einzigen Werkstücks abhängig von dem jeweils bearbeiteten oder vermessenen Bereich des Werkstücks individuell auf die entsprechenden Gegebenheiten und Anforderungen eingegangen werden. In Bereichen mit einer geringen Oberflächenkrümmung des Werkstücks kann beispielsweise eine andere Festlegung des ersten kinematischen Parameters vorteilhaft sein, als in einem Bereich desselben Werkstücks mit einer hohen lokalen Krümmung.

Gemäß zumindest einer Ausführungsform ist der erste Maximalwert durch eine maximale Bahngeschwindigkeit der Vorschubbewegung gegeben.

Die Bahngeschwindigkeit der Vorschubbewegung ist dabei gegeben durch $v_B = ds/dt$, wobei s dem Ort auf der Bahn entspricht. Dabei kann s als Funktion der einzelnen Achskoordinaten der wenigstens zwei Achsen der Werkzeugmaschine verstanden werden, sodass insbesondere $s = s(x_1, x_2)$, wobei $x_1$ und $x_2$ den Koordinaten entsprechend der ersten beziehungsweise der zweiten Achse darstellen.

Dass der erste Maximalwert durch die maximale Bahngeschwindigkeit gegeben ist, kann insbesondere derart verstanden werden, dass der erste Maximalwert gleich der maximalen Bahngeschwindigkeit ist oder gleich einer Funktion der maximalen Bahngeschwindigkeit und gegebenenfalls von bahnabhängigen Parametern. Dabei sei darauf hingewiesen, dass die maximale Bahngeschwindigkeit hier nicht als Funktion der Zeit, sondern als Wert angesehen werden kann, die Funktion also keine zeitliche Ableitung beinhaltet. Dabei kann die maximale Bahngeschwindigkeit in verschiedenen Ausführungsformen als Funktion, beispielsweise als Polynomfunktion, der Bahn dargestellt werden.

Erfindungsgemäß wird mittels der Steuereinheit ein zweiter Maximalwert für einen zweiten kinematischen Parameter betreffend die Vorschubbewegung entlang des Abschnitts abhängig von der geometrischen Beschreibung festgelegt, beispielsweise offline. Die Planung der Vorschubbewegung entlang des Abschnitts wird unter Berücksichtigung des zweiten Maximalwerts durchgeführt.

Gemäß zumindest einer Ausführungsform ist der zweite Maximalwert durch eine maximale Bahnbeschleunigung der Vorschubbewegung gegeben. Die Bahnbeschleunigung entspricht dabei insbesondere $a_B = d^2s/dt^2$.

Der erste und der zweite kinematische Parameter sind dabei insbesondere nicht unabhängig voneinander. Handelt es sich bei dem ersten kinematischen Parameter um eine Funktion der Bahngeschwindigkeit und bei dem zweiten kinematischen Parameter um eine Funktion der Bahnbeschleunigung, so können diese im Allgemeinen nicht unabhängig voneinander festgelegt werden. Durch die Berücksichtigung sowohl des ersten kinematischen Parameters als auch des zweiten kinematischen Parameters und der jeweiligen Begrenzung anhand des ersten Maximalwerts und des zweiten Maximalwerts kann also eine konsistente Optimierung der Bahnplanung erfolgen.

Erfindungsgemäß wird, insbesondere mittels der Steuereinheit, ein Wertebereich für den ersten Maximalwert abhängig von einem vorgegebenen ersten kinematischen Grenzwert für die erste Achse bestimmt. Ein Wertebereich für den zweiten Maximalwert wird, insbesondere mittels der Steuereinheit, abhängig von dem ersten kinematischen Grenzwert für die erste Achse bestimmt. Zum Festlegen des ersten Maximalwerts und des zweiten Maximalwerts wird mittels der Steuereinheit ein Aufteilungsparameter abhängig von der geometrischen Beschreibung festgelegt, durch den sowohl der erste Maximalwert als auch der zweite Maximalwert eindeutig innerhalb des jeweiligen Wertebereichs definiert werden.

Bei dem ersten kinematischen Grenzwert für die erste Achse kann es sich insbesondere um eine maximale Achsbeschleunigung der ersten Achse handeln. Diese ist für die Werkzeugmaschine beispielsweise fest vorgegeben und kann nicht im Rahmen der Parametrisierung der Steuerung verändert werden.

Aus den Bewegungsgleichungen für die Achsen kann ein Zusammenhang zwischen der jeweiligen Achsbeschleunigung einerseits und der Bahngeschwindigkeit sowie der Bahnbeschleunigung andererseits hergestellt werden. Insbesondere ist die Achsbeschleunigung einer Achse gegeben durch eine Summe aus einem Zentripetalanteil, der proportional zum Quadrat der Bahngeschwindigkeit ist, und einem Bahnbeschleunigungsteil der proportional zur Bahnbeschleunigung ist. Da die jeweilige Achsbeschleunigung durch den ersten kinematischen Grenzwert begrenzt ist, müssen die Grenzwerte für den Zentripetalterm und den Bahnbeschleunigungsterm entsprechend aufgeteilt werden, um die Steuerung zu parametrisieren. Der Aufteilungsparameter legt dabei gewissermaßen fest, welcher Anteil der verfügbaren Achsbeschleunigung dem Zentripetalterm zukommen soll und welcher Anteil dementsprechend dem Bahnbeschleunigungsterm zukommt. Der Aufteilungsparameter kann als Effekt der Krümmung auf die Bahnbeschleunigung angesehen werden und daher beispielsweise als CEOPA (englisch: "curve effect on path acceleration") bezeichnet werden.

Durch die Wahl von CEOPA kann die verfügbare Achsbeschleunigung daher je nach den konkreten Anforderungen optimal aufgeteilt werden, indem CEOPA abhängig von der geometrischen Beschreibung und insbesondere für jeden Abschnitt der Bahn unabhängig voneinander festgelegt wird.

Es wird darauf hingewiesen, dass die konkrete Bahnplanung die Begrenzungen aller Achsen berücksichtigen muss. Dementsprechend können in entsprechenden Ausführungsformen die Erläuterungen bezüglich der ersten Achse auf alle weiteren Achsen der Werkzeugmaschine übertragen werden. Insbesondere kann auch für die zweite Achse und für jede weitere Achse der Werkzeugmaschine eine entsprechende Aufteilung anhand eines Aufteilungsparameters vorgenommen werden. Unterscheiden sich beispielsweise die maximalen Achsbeschleunigungen einzelner Achsen voneinander, so können gegebenenfalls nicht alle Wertebereiche voll ausgenutzt werden, sondern es müssen die Randbedingungen der übrigen Achsen berücksichtigt werden.

Gemäß zumindest einer Ausführungsform wird mittels der Steuereinheit ein Optimierungsverfahren durchgeführt, um den Aufteilungsparameter festzulegen, wobei der Aufteilungsparameter als Optimierungsparameter verwendet wird.

Aufgrund der möglichen Wechselwirkung der einzelnen Achsen hinsichtlich der zulässigen Wertebereiche, kann das Optimierungsverfahren dabei entsprechende Randbedingungen berücksichtigen, um alle Achsbegrenzungen zu berücksichtigen.

Durch die Optimierung mit dem Aufteilungsparameter als Optimierungsparameter kann das jeweils konkret gegebene Erfordernis, beispielsweise hinsichtlich Qualität oder Durchlaufzeit, möglichst gut erreicht werden.

Gemäß zumindest einer Ausführungsform wird als Zielfunktion für das Optimierungsverfahren eine Durchlaufzeit zur Bearbeitung oder Vermessung eines Werkstücks gemäß der Bahn verwendet.

In solchen Ausführungsformen können beispielsweise größere Maßtoleranzen akzeptabel sein, als dies bei der universellen robusten Auslegung einer Werkzeugmaschine der Fall wäre. Beispielsweise kann ein höheres Maß an Überschwingen der Achsen akzeptiert werden, um das Ziel der möglichst geringen Durchlaufzeit zu erreichen.

Gemäß zumindest einer Ausführungsform wird als Zielfunktion für das Optimierungsverfahren eine Kenngröße für eine Genauigkeit zur Bearbeitung oder Vermessung des Werkstücks gemäß der Bahn verwendet.

In solchen Ausführungsformen steht beispielsweise die Minimierung der Durchlaufzeit nicht notwendigerweise im Fokus, sondern eine möglichst exakte Bewegung der Achsen gemäß der Bahn. Dies kann beispielsweise bei einer Vermessung des Werkstücks von erhöhter Bedeutung sein oder bei erhöhten Anforderungen an die Maßhaltigkeit beziehungsweise bei sehr geringen Toleranzen zur Fertigung des Werkstücks.

Gemäß zumindest einer Ausführungsform wird als Zielfunktion für die Optimierungsfunktion eine Kenngröße für eine Oberflächengüte zur Bearbeitung des Werkstücks gemäß der Bahn verwendet.

Die Oberflächengüte kann beispielsweise durch eine möglichst gleichmäßige Bewegung der Achsen ohne abrupte Richtungswechsel und dergleichen optimiert werden.

Durch das verbesserte Konzept kann die Werkzeugmaschine also entsprechend der tatsächlichen Anforderungen optimal betrieben werden.

Die unterschiedlichen Zielfunktionen können dabei auch für unterschiedliche Bereiche des Werkstücks beziehungsweise für unterschiedliche Abschnitte der Bahn kombiniert werden, sodass beispielsweise in einem ersten Bereich des Werkstücks eine möglichst geringe Durchlaufzeit im Vordergrund steht, für einen anderen Bereich jedoch eine möglichst hohe Genauigkeit oder Oberflächengüte.

Gemäß zumindest einer Ausführungsform wird mittels der Steuereinheit ein dritter Maximalwert für einen dritten kinematischen Parameter betreffend die Vorschubbewegung entlang des Abschnitts abhängig von der geometrischen Beschreibung festgelegt. Die Planung der Vorschubbewegung entlang des Abschnitts wird unter Berücksichtigung des dritten Maximalwerts durchgeführt.

Gemäß zumindest einer Ausführungsform ist der dritte Maximalwert durch einen maximalen Bahnruck der Vorschubbewegung gegeben. Der Bahnruck ist dabei insbesondere gegeben durch $d^3s/dt^3$.

Wie für die Achsbeschleunigungen oben ausgeführt, kann für die Achsen der Werkzeugmaschine auch jeweils ein maximaler Achsruck fest vorgegeben sein. Durch den kinematischen Zusammenhang zwischen Achsruck einerseits und Bahnbeschleunigung, Bahngeschwindigkeit und Bahnruck andererseits ergeben sich auch für Bahngeschwindigkeit, Bahnbeschleunigung und Bahnruck durch die Begrenzung des Achsrucks entsprechende Einschränkungen. Auch hier kann durch zwei weitere Aufteilungsparameter, die auch als CEOPJ und CEOPAJ bezeichnet werden können (englisch: "curve effect on path jerk" beziehungsweise "curve effect on path acceleration jerk"), effektiv eine Aufteilung des verfügbaren maximalen Achsrucks auf die einzelnen Terme vorgenommen werden, die im dann beispielsweise durch einen ersten Term, der proportional zur dritten Potenz der Bahngeschwindigkeit ist, einen zweiten Term, der proportional zu einem Produkt aus Bahngeschwindigkeit und Bahnbeschleunigung ist, und einem dritten Term, der proportional zum Bahnruck ist, gegeben sind.

Die sich daraus ergebenden Beschränkungen beispielsweise für Bahngeschwindigkeit, Bahnbeschleunigung und Bahnruck, können als weitere Randbedingungen auch für die obigen Festlegungen des ersten beziehungsweise zweiten Maximalwerts für den ersten beziehungsweise zweiten kinematischen Parameter berücksichtigt werden.

Durch die entsprechende individuelle Festlegung des dritten Maximalwerts beziehungsweise durch die individuelle Begrenzung des dritten kinematischen Parameters abhängig von der geometrischen Beschreibung kann die Parametrisierung der Steuerung weiter individualisiert und optimiert werden.

Gemäß dem verbesserten Konzept wird auch ein Steuerungssystem für eine wenigstens zweiachsige Werkzeugmaschine angegeben, wobei das Steuerungssystem eine Steuereinheit aufweist oder aus der Steuereinheit besteht. Die Steuereinheit ist dazu eingerichtet, die Werkzeugmaschine zur Ausführung einer Vorschubbewegung durch wenigstens abschnittsweise gleichzeitige Bewegung einer ersten Achse und einer zweiten Achse der Werkzeugmaschine gemäß einer durch eine vorgegebene geometrische Beschreibung definierte Bahn anzusteuern. Die Steuereinheit ist dazu eingerichtet, einen ersten Maximalwert für einen ersten kinematischen Parameter betreffend die Vorschubbewegung entlang eines Abschnitts der Bahn abhängig von der geometrischen Beschreibung festzulegen und die Vorschubbewegung entlang des Abschnitts unter Berücksichtigung des ersten Maximalwerts zu planen. Die Steuereinheit ist dazu eingerichtet, die erste Achse und die zweite Achse zur Ausführung der Vorschubbewegung gemäß der geplanten Bewegung entlang des Abschnitts anzusteuern.

Weitere Ausführungsformen des Steuerungssystems nach dem verbesserten Konzept folgen direkt aus den verschiedenen Ausgestaltungsformen des Verfahrens nach dem verbesserten Konzept und umgekehrt. Insbesondere kann ein Steuerungssystem nach dem verbesserten Konzept dazu eingerichtet oder programmiert sein, ein Verfahren nach dem verbesserten Konzept durchzuführen oder das Steuerungssystem führt ein solches Verfahren durch.

Gemäß dem verbesserten Konzept wird auch eine Werkzeugmaschine angegeben, die wenigstens zweiachsig ausgeführt ist und ein Steuerungssystem nach dem verbesserten Konzept enthält.

Gemäß dem verbesserten Konzept wird auch ein Computerprogramm mit Befehlen angegeben, wobei die Befehle bei Ausführung der

Befehle oder des Computerprogramms durch ein Steuerungssystem nach dem verbesserten Konzept, insbesondere durch die Steuereinheit des Steuerungssystems, das Steuerungssystem dazu veranlassen, ein Verfahren nach dem verbesserten Konzept durchzuführen und/oder bei Ausführung durch eine Werkzeugmaschine nach dem verbesserten Konzept, insbesondere die Steuereinheit des Steuerungssystems der Werkzeugmaschine, die Werkzeugmaschine dazu veranlassen, ein Verfahren nach dem verbesserten Konzept durchzuführen.

Gemäß dem verbesserten Konzept wird auch ein computerlesbares Speichermedium angegeben, das ein Computerprogramm nach dem verbesserten Konzept speichert.

Die Erfindung wird im Folgenden anhand konkreter Ausführungsbeispiele und zugehöriger schematischer Zeichnungen näher erläutert. Dabei zeigt

FIG    eine schematische Darstellung einer beispielhaften Aus-führungsform einer Werkzeugmaschine nach dem verbesserten Konzept.

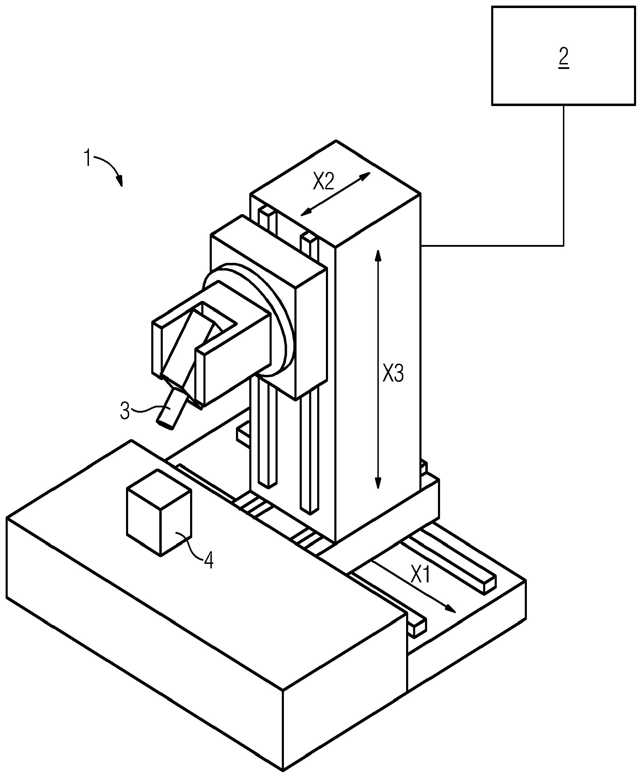

In der Figur FIG ist schematisch eine beispielhafte Ausführungsform einer Werkzeugmaschine 1 nach dem verbesserten Konzept dargestellt, die dazu eingerichtet ist, ein Werkzeug 3 relativ zu einem Werkstück 4 entlang wenigstens zwei Linearachsen, im vorliegenden Beispiel sind drei Linearachsen X1, X2, X3 dargestellt, bewegen kann. Die Vorschubbewegung kann dabei durch Bewegung des Werkzeugs 3 bei ortsfestem Werkstück 4 oder umgekehrt erfolgen. Die Darstellung der Werkzeugmaschine 1 in der Figur ist rein schematisch und beispielhaft zu verstehen und begrenzt insbesondere das verbesserte Konzept nicht in Bezug auf den Typ der Werkzeugmaschine oder die Art der Vorschubbewegungen.

Die Werkzeugmaschine 1 weist außerdem eine Steuereinheit 2 auf, die ein Steuerungssystem nach dem verbesserten Konzept darstellt.

Die maximale realisierbare Bahngeschwindigkeit $v_B$ an der Werkzeugmaschine 1 ist begrenzt durch die axialen dynamischen Begrenzungen. Dynamische Begrenzungen einer Achse i können beispielsweise maximale Achsgeschwindigkeit $v_{i,max}$, maximale Achsbeschleunigung $a_{i,max}$ und maximaler Achsruck $j_{i,max}$ sein. Die Achsgeschwindigkeit ist gegeben durch $v_i = dx_i/dt$, die Achsbeschleunigung durch $a_i = d^2x_i/dt^2$ und der Achsruck durch $j_i = d^3x_i/dt^3$ wobei $x_i$ die der Achse i entsprechende Koordinate beziehungsweise den der Achse i entsprechenden Freiheitsgrad bezeichnet. Mit $\lambda_i = dx_i/ds$, $k_i = d^2x_i/ds^2$ und $m_i = d^3x_i/ds^3$ gilt dann

$$v_i = \lambda_i * v_B \ , \qquad\qquad (1)$$

$$a_i = k_i * v_B^2 + \lambda_i * a_B \ , \ \text{sowie} \qquad (2)$$

$$j_i = m_i * v_B^3 + 3 * k_i * v_B * a_B + \lambda_i * j_B \ . \qquad (3)$$

Die Achsgeschwindigkeiten $v_i$ haben direkten Einfluss auf die Bahngeschwindigkeit $v_B$. Gleichung (1) stellt eine lineare Beziehung zwischen den Achsgeschwindigkeit $v_i$ und Bahngeschwindigkeit $v_B$ dar. Mit Kenntnis der maximalen erlaubten Achsgeschwindigkeiten $v_{i,max}$, kann diese erste maximale realisierbare Bahngeschwindigkeit $v_B$ aus Gleichung (1) bestimmt werden.

Im Gegensatz dazu, ist die Beziehung aus Gleichung (2) nicht linear und kann nicht leicht gelöst werden. Die maximale Achsbeschleunigung $a_i$ muss optimal zwischen den beiden Termen auf der rechten Seite von Gleichung (2), die als Zentripetalterm und Bahnbeschleunigungsterm bezeichnet werden können, verteilt werden. Diese Aufteilung kann mit Hilfe von Aufteilungsparametern $CEOPA_i$ mit $0 \leq CEOPA_i \leq 1$ realisiert werden, der gewissermaßen einen Teil der maximalen Achsbeschleunigung $a_{i,max}$ für den Zentripetalterm reserviert:

$$CEOPA_i * a_{i,max} := k_i * v_{B,max}^2 \ , \qquad (4)$$

so dass die maximale Bahngeschwindigkeit $v_{B,max}$ gegeben ist durch:

$$v_{B,max} = (CEOPA_i * a_{i,max} / k_i)^{1/2}. \qquad (5)$$

Für den Bahnbeschleunigungsterm ergibt sich damit

$$(1 - CEOPA_i) * a_{i,max} = \lambda_i * a_{B,max} \qquad (6)$$

beziehungsweise

$$a_{B,max} = (1 - CEOPA_i) * a_{i,max} / \lambda_i \ . \qquad (7)$$

Mit Kenntnis der maximalen Achsbeschleunigung $a_{i,max}$ und dem Faktor $CEOPA_i$, können anhand der Gleichungen (5) und (7) eine weitere maximal realisierbare Bahngeschwindigkeit $v_{B,max}$ und eine maximal realisierbare Bahnbeschleunigung $a_{B,max}$ bestimmt werden, wobei die Begrenzung durch Gleichung (1) gegebenenfalls zu berücksichtigen ist.

Auf einer Speichereinheit der Steuereinheit 2 ist ein Teileprogramm gespeichert, das eine geometrische Beschreibung einer Bahn beinhaltet, entlang der die Vorschubbewegung durchgeführt werden soll. Die Steuereinheit 2 kann die Vorschubbewegung für die einzelnen Abschnitte oder für alle Abschnitte der Bahn basierend auf der vorgegebenen geometrischen Beschreibung planen.

Dazu kann die Steuereinheit 2 beispielsweise die maximale Bahngeschwindigkeit $v_{B,max}$ festlegen und die Vorschubbewegung entlang des Abschnitts unter Berücksichtigung der maximalen Bahngeschwindigkeit $v_{B,max}$ planen, also derart planen, dass der Betrag der tatsächlichen Bahngeschwindigkeit $v_B$ entlang des Abschnitts die maximale beziehungsweise programmierte Bahngeschwindigkeit $v_{B,max}$ nicht überschreitet.

Um die maximale Bahngeschwindigkeit $v_{B,max}$ festzulegen, legt die Steuereinheit 2 insbesondere die Werte für $CEOPA_i$ fest. Dabei ist zu berücksichtigen, dass der Zusammenhang (5) für alle Achsen der Werkzeugmaschine 1 gilt. Die Festlegung der maximalen Bahngeschwindigkeit $v_{B,max}$ erfolgt daher insbesondere unter Berücksichtigung aller entsprechenden Zusammenhänge, beispielsweise als Minimalwert der entsprechend möglichen Werte für die maximale Bahngeschwindigkeit $v_{B,max}$.

Durch die Festlegung von $CEOPA_i$ ist über den Zusammenhang (7) kann auch die maximale Bahnbeschleunigung $a_{B,max}$ festgelegt werden, wobei auch hier die entsprechenden Zusammenhänge für alle Achsen berücksichtigt werden.

Die Wahl von $CEOPA_i$ kann dabei für unterschiedliche Werkstückklassen oder für jedes konkrete Werkstück 4 unterschiedlich erfolgen und gegebenenfalls auch für verschiedene Abschnitte einer Bahn bei der Bearbeitung oder Vermessung eines einzigen Werkstücks 4 dynamisch verändert werden.

Je größer die festgelegten Werte für $CEOPA_i$ dabei sind, desto mehr liegt der Fokus auf dem Erreichen einer möglichst hohen Bahngeschwindigkeit beziehungsweise Zentripetalbeschleunigung auf Kosten der verfügbaren maximalen Bahnbeschleunigung und umgekehrt. Beispielsweise kann bei geringen Bahnkrümmungen $CEOPA_i$ eher groß, also insbesondere größer als 0,5, gewählt werden. Bei stärkeren Krümmungen innerhalb desselben Werkstücks 4 oder bei anderen Bauteilen oder Bauteilklassen, kann beispielsweise ein kleinerer Wert für $CEOPA_i$, insbesondere ein Wert von ungefähr 0,5, gewählt werden, um so eine symmetrische Aufteilung zwischen Zentripetalbeschleunigung und Bahnbeschleunigung zu erzielen.

Eine analoge Aufteilung des maximalen Achsrucks $j_{i,max}$ kann ausgehend von Gleichung (3) vorgenommen werden. Hierzu sind zwei weitere Aufteilungsparameter $CEOPJ_i$ und $CEOPAJ_i$ erforderlich:

$$CEOPAJ_i * j_{i,max} := m_i * v_{B,max}^3 , \qquad\qquad (8)$$

$$CEOPJ_i * (1-CEOPAJ_i) * j_{i,max} := 3 * k_i * v_{B,max} * a_{B,max} , \quad (9)$$

sodass folgt

$$[1 - CEOPJ_i * (1-CEOPAJ_i)] * j_{i,max} = \lambda_i * j_{B,max} , \qquad (10)$$

beziehungsweise

$$j_{B,max} = [1 - CEOPJ_i * (1-CEOPAJ_i)] * j_{i,max} / \lambda_i . \qquad (11)$$

Wie oben für $CEOPA_i$ ausgeführt, können auch die Aufteilungsparameter $CEOPAJ_i$ und $CEOPJ_i$ entsprechend der konkreten Erfordernisse angepasst und optimiert werden.

In verschiedenen Ausgestaltungsformen können bei der Durchführung der Bearbeitung oder Vermessung von Werkstücken 4 durch die Werkzeugmaschine 1 auch bei jedem Durchlauf entsprechende Echtzeitparameter gespeichert werden. Die Echtzeitparameter oder Echtzeitdaten können bei späteren Durchläufen berücksichtigt werden. Bei der Bearbeitung identischer Werkstücke 4, können so die zur Optimierung oder Festlegung der Aufteilungsparameter erforderlichen Rechenschritte dabei gegebenenfalls eingespart werden. Alternativ oder zusätzlich kann auch eine iterative Anpassung der Aufteilungsparameter erfolgen, um so schrittweise ein optimales Ergebnis zu erhalten.

Wie beschrieben, ermöglicht es das verbesserte Konzept, die Steuerung einer Werkzeugmaschine mit wenigstens zwei Achsen insbesondere individuell und optimal zu parametrisieren, sodass Kompromisse, wie sie bei universell parametrierten Steuerungen hinzunehmen sind, vermieden werden können und so insgesamt, je nach konkretem Erfordernis, eine reduzierte Durchlaufzeit und/oder eine erhöhte Fertigungs- oder Vermessungsqualität erzielt werden kann.

In entsprechenden Weiterbildungen kann das verbesserte Konzept auch entsprechend für die Kombinatorik anderer relevanter Parameter für achsübergreifende Genauigkeiten oder zur Regelung von Antrieben verwendet werden.

**Patentansprüche**

**1.** Verfahren zum Betreiben einer wenigstens zweiachsigen Werkzeugmaschine (1), wobei eine geometrische Beschreibung einer Bahn vorgegeben wird und eine Vorschubbewegung gemäß der Bahn durch wenigstens abschnittsweise gleichzeitige Bewegung einer ersten Achse (X1, X2, X3) und einer zweiten Achse (X1, X2, X3) der Werkzeugmaschine (1) ausgeführt wird, wobei

- mittels einer Steuereinheit (2) der Werkzeugmaschine (1) ein erster Maximalwert für einen ersten kinematischen Parameter betreffend die Vorschubbewegung entlang eines Abschnitts der Bahn abhängig von der geometrischen Beschreibung festgelegt wird;
- die Vorschubbewegung entlang des Abschnitts mittels der Steuereinheit (2) unter Berücksichtigung des ersten Maximalwerts geplant wird;
- die erste Achse (X1, X2, X3) und die zweite Achse (X1, X2, X3) mittels der Steuereinheit (2) angesteuert werden, um die Vorschubbewegung gemäß der geplanten Bewegung entlang des Abschnitts auszuführen;
**dadurch gekennzeichnet, dass**
- mittels der Steuereinheit (2) ein zweiter Maximalwert für einen zweiten kinematischen Parameter betreffend die Vorschubbewegung entlang des Abschnitts abhängig von der geometrischen Beschreibung festgelegt wird;
- die Planung der Vorschubbewegung entlang des Abschnitts unter Berücksichtigung des zweiten Maximalwerts durchgeführt wird;
- ein Wertebereich für den ersten Maximalwert abhängig von einem vorgegebenen ersten kinematischen Grenzwert für die erste Achse (X1, X2, X3) bestimmt wird;
- ein erster Wertebereich für den zweiten Maximalwert abhängig von dem ersten kinematischen Grenzwert für die erste Achse (X1, X2, X3) bestimmt wird; und
- zum Festlegen des ersten Maximalwerts und des zweiten Maximalwerts mittels der Steuereinheit (2) ein Aufteilungsparameter abhängig von der geometrischen Beschreibung festgelegt wird, durch den sowohl der erste Maximalwert als auch der zweite Maximalwert eindeutig innerhalb des jeweiligen ersten Wertebereichs definiert werden.

2. Verfahren nach Anspruch 1,
**dadurch gekennzeichnet, dass**
der erste Maximalwert durch eine maximale Bahngeschwindigkeit der Vorschubbewegung gegeben ist.

3. Verfahren nach Anspruch 1 oder 2,
**dadurch gekennzeichnet, dass**
mittels der Steuereinheit (2) ein Optimierungsverfahren durchgeführt wird, um den Aufteilungsparameter festzulegen, wobei der Aufteilungsparameter als Optimierungsparameter verwendet wird.

4. Verfahren nach Anspruch 3,
**dadurch gekennzeichnet, dass**
als Zielfunktion für das Optimierungsverfahren eine Durchlaufzeit zur Bearbeitung oder Vermessung eines Werkstücks (4) gemäß der Bahn verwendet wird.

5. Verfahren nach Anspruch 3,
**dadurch gekennzeichnet, dass**
als Zielfunktion für das Optimierungsverfahren eine Kenngröße für eine Genauigkeit zur Bearbeitung oder Vermessung eines Werkstücks (4) gemäß der Bahn verwendet wird.

6. Verfahren nach Anspruch 3,
**dadurch gekennzeichnet, dass**
als Zielfunktion für das Optimierungsverfahren eine Kenngröße für eine Oberflächengüte zur Bearbeitung des Werkstücks (4) gemäß der Bahn verwendet wird.

7. Verfahren nach einem der vorhergehenden Ansprüche,
**dadurch gekennzeichnet, dass**
der zweite Maximalwert durch eine maximale Bahnbeschleunigung der Vorschubbewegung gegeben ist.

8. Verfahren nach einem der vorhergehenden Ansprüche, **dadurch gekennzeichnet, dass**

- mittels der Steuereinheit (2) ein dritter Maximalwert für einen dritten kinematischen Parameter betreffend die Vorschubbewegung entlang des Abschnitts abhängig von der geometrischen Beschreibung festgelegt wird; und
- die Planung der Vorschubbewegung entlang des Abschnitts unter Berücksichtigung des dritten Maximalwerts durchgeführt wird.

9. Verfahren nach Anspruch 8,
**dadurch gekennzeichnet, dass**
der dritte Maximalwert durch einen maximalen Bahnruck der Vorschubbewegung gegeben ist.

10. Steuerungssystem für eine wenigstens zweiachsige Werkzeugmaschine (1), wobei das Steuerungssystem eine Steuereinheit (2) aufweist, die dazu eingerichtet ist, die Werkzeugmaschine (1) zur Ausführung einer Vorschubbewegung durch wenigstens abschnittsweise gleichzeitige Bewegung einer ersten Achse (X1, X2, X3) und einer zweiten Achse (X1, X2, X3) der Werkzeugmaschine (1) gemäß einer durch eine vorgegebene geometrische Beschreibung definierte Bahn anzusteuern, wobei die Steuereinheit (2) dazu eingerichtet ist,

- einen ersten Maximalwert für einen ersten kinematischen Parameter betreffend die Vorschubbewegung entlang eines Abschnitts der Bahn abhängig von der geometrischen Beschreibung festzulegen;
- die Vorschubbewegung entlang des Abschnitts unter Berücksichtigung des ersten Maximalwerts zu planen;
- die erste Achse (X1, X2, X3) und die zweite Achse (X1, X2, X3) zur Ausführung der Vorschubbewegung gemäß der geplanten Bewegung entlang des Abschnitts anzusteuern;

**dadurch gekennzeichnet, dass**
die Steuereinheit (2) dazu eingerichtet ist,

- einen zweiten Maximalwert für einen zweiten kinematischen Parameter betreffend die Vorschubbewegung entlang des Abschnitts abhängig von der geometrischen Beschreibung festzulegen;
- die Planung der Vorschubbewegung entlang des Abschnitts unter Berücksichtigung des zweiten Maximalwerts durchzuführen;
- einen Wertebereich für den ersten Maximalwert abhängig von einem vorgegebenen ersten kinematischen Grenzwert für die erste Achse (X1, X2, X3) zu bestimmen;
- einen ersten Wertebereich für den zweiten Maximalwert abhängig von dem ersten kinematischen Grenzwert für die erste Achse (X1, X2, X3) zu bestimmen; und
- zum Festlegen des ersten Maximalwerts und des zweiten Maximalwerts ein Aufteilungsparameter abhängig von der geometrischen Beschreibung festzulegen, durch den sowohl der erste Maximalwert als auch der zweite Maximalwert eindeutig innerhalb des jeweiligen ersten Wertebereichs definiert werden.

11. Werkzeugmaschine, die wenigstens zweiachsig ausgeführt ist und ein Steuerungssystem nach Anspruch 10 enthält.

12. Computerprogramm mit Befehlen, die bei Ausführung durch ein Steuerungssystem nach Anspruch 10 das Steuerungssystem dazu veranlassen, ein Verfahren nach einem der Ansprüche 1 bis 9 durchzuführen.

13. Computerlesbares Speichermedium, das ein Computerprogramm nach Anspruch 12 speichert.

**Claims**

1. Method for operation of an at least two-axis machine tool (1), wherein a geometric description of a path is predetermined and an advancing movement in accordance with the path is carried out through at least sectionally simultaneous movement of a first axis (X1, X2, X3) and a second axis (X1, X2, X3) of the machine tool (1), wherein

- by means of a control unit (2) of the machine tool (1) a first maximum value for a first kinematic parameter relating to the advancing movement along a section of the path is ascertained dependent on the geometric description;
- the advancing movement along the section is planned by means of the control unit (2) taking into account the first maximum value;
- the first axis (X1, X2, X3) and the second axis (X1, X2, X3) are activated by means of the control unit (2) in order to carry out the advancing movement in accordance with the planned movement along the section;
**characterised in that**
- by means of the control unit (2) a second maximum value for a second kinematic parameter relating to the advancing movement along the section is ascertained dependent on the geometric description;
- the planning of the advancing movement along the section is carried out while taking account of the second maximum value;
- a range of values for the first maximum value is determined depending on a predetermined first kinematic limit value for the first axis (X1, X2, X3);
- a first range of values for the second maximum value is determined depending on the first kinematic limit value for the first axis (X1, X2, X3); and
- for determination of the first maximum value and the second maximum value by means of the control unit (2) a division parameter dependent on the geometric description is ascertained, through which both the first maximum value and also the second maximum value are defined uniquely within the respective first range of values.

2. Method according to claim 1,
   **characterised in that**
   the first maximum value is given by a maximum path velocity of the advancing movement.

3. Method according to claim 1 or 2,
   **characterised in that**
   an optimisation method is carried out by means of the control unit (2) in order to ascertain the division parameter, wherein the division parameter is used as an optimisation parameter.

4. Method according to claim 3,
   **characterised in that**
   a throughput time for processing or measurement of a workpiece (4) in accordance with the path is used as a target function for the optimisation method.

5. Method according to claim 3,
   **characterised in that**
   a characteristic variable for an accuracy for processing or measuring a workpiece (4) in accordance with the path is used as a target function for the optimisation method.

6. Method according to claim 3,
   **characterised in that**
   a characteristic variable for a surface quality for processing the workpiece (4) in accordance with the path is used as a target function for the optimisation method.

7. Method according to one of the preceding claims,
   **characterised in that**
   the second maximum value is given by a maximum path acceleration of the advancing movement.

8. Method according to one of the preceding claims,
   **characterised in that**

   - by means of the control unit (2) a third maximum value for a third kinematic parameter relating to the advancing movement along the section depending on the geometric description is ascertained; and
   - the planning of the advancing movement along the section is carried out while taking into account the third maximum value.

9. Method according to claim 8,
   **characterised in that**
   the third maximum value is given by a maximum path jerk of the advancing movement.

10. Control system for an at least two-axis machine tool (1), wherein the control system has a control unit (2) that is configured to actuate the machine tool (1) to carry out an advancing movement through at least sectionally simultaneous movement of a first axis (X1, X2, X3) and a second axis (X1, X2, X3) of the machine tool (1) in accordance with a path defined by a predetermined geometric description, wherein the control unit (2) is configured,

    - to ascertain a first maximum value for a first kinematic parameter relating to the advancing movement along a section of the path depending on the geometric description;
    - to plan the advancing movement along the section while taking into account the first maximum value;

- to actuate the first axis (X1, X2, X3) and the second axis (X1, X2, X3) for carrying out the advancing movement in accordance with the planned movement along the section;

**characterised in that**

the control unit (2) is configured,

- to ascertain a second maximum value for a second kinematic parameter relating to the advancing movement along the section depending on the geometric description;
- to carry out the planning of the advancing movement along the section while taking into account the second maximum value;
- to determine a range of values for the first maximum value depending on a predetermined first kinematic limit value for the first axis (X1, X2, X3);
- to determine a first range of values for the second maximum value depending on the first kinematic limit value for the first axis (X1, X2, X3); and
- in order to ascertain the first maximum value and the second maximum value, to ascertain a division parameter dependent on the geometric description, through which both the first maximum value and also the second maximum value will be uniquely defined within the respective first range of values.

11. Machine tool, which is designed with at least two axes and contains a control system according to claim 10.

12. Computer program with commands, which when executed by a control system according to claim 10, cause the control system to carry out a method according to one of claims 1 to 9.

13. Computer-readable storage medium, which stores a computer program according to claim 12.

**Revendications**

1. Procédé pour faire fonctionner une machine-outil (1) ayant au moins deux axes, dans lequel on prescrit une description géométrique d'une trajectoire et on effectue un mouvement d'avance suivant la trajectoire par au moins un déplacement simultané au moins par tronçons d'un premier axe (X1, X2, X3) et d'un deuxième axe (X1, X2, X3) de la machine-outil (1), dans lequel,

- au moyen d'une unité (2) de commande de la machine-outil (1), on fixe, en fonction de la description géométrique, une première valeur maximum d'un premier paramètre cinématique concernant le mouvement d'avance le long d'un tronçon de la trajectoire ;
- on planifie le mouvement d'avance le long du tronçon au moyen de l'unité (2) de commande, en tenant compte de la première valeur maximum ;
- on commande le premier axe (X1, X2, X3) et le deuxième axe (X1, X2, X3) au moyen de l'unité (2) de commande pour effectuer le mouvement d'avance suivant le mouvement planifié le long du tronçon ;
**caractérisé en ce que**
- au moyen de l'unité (2) de commande on fixe, en fonction de la description géométrique, une deuxième valeur maximum d'un deuxième paramètre cinématique concernant le mouvement d'avance le long du tronçon ;
- on effectue la planification du mouvement d'avance le long du tronçon en tenant compte de la deuxième valeur maximum ;
- on détermine une plage de valeurs pour la première valeur maximum, en fonction d'une première valeur limite cinématique donnée à l'avance pour le premier axe (X1, X2, X3) ;
- on détermine une première plage de valeurs pour la deuxième valeur maximum, en fonction de la première valeur limite cinématique pour le premier axe (X1, X2, X3) et ;
- pour la fixation de la première valeur maximum et de la deuxième valeur maximum on fixe, en fonction de la description géométrique, au moyen de l'unité (2) de commande, un paramètre de répartition, par lequel on définit tant la première valeur maximum qu'également la deuxième valeur maximum de manière univoque dans la première plage respective de valeurs.

2. Procédé suivant la revendication 1,
**caractérisé en ce que**
la première valeur maximum est donnée par une vitesse maximum de trajectoire du mouvement d'avance.

**3.** Procédé suivant la revendication 1 ou 2,
**caractérisé en ce que**
au moyen de l'unité (2) de commande, on effectue un procédé d'optimisation pour fixer le paramètre de répartition, dans lequel on utilise le paramètre de répartition comme paramètre d'optimisation.

**4.** Procédé suivant la revendication 3,
**caractérisé en ce que** l'
on utilise comme fonction cible pour le procédé d'optimisation un temps de passage pour l'usinage ou la mesure d'une pièce (4) suivant la trajectoire.

**5.** Procédé suivant la revendication 3,
**caractérisé en ce que** l'
on utilise comme fonction cible pour le procédé d'optimisation une grandeur caractéristique d'une précision de l'usinage ou de la mesure d'une pièce (4) suivant la trajectoire.

**6.** Procédé suivant la revendication 3,
**caractérisé en ce que** l'
on utilise comme fonction cible pour le procédé d'optimisation une grandeur caractéristique d'une qualité de surface pour l'usinage de la pièce (4) suivant la trajectoire.

**7.** Procédé suivant l'une des revendications précédentes,
**caractérisé en ce que**
la deuxième valeur maximum est donnée par une accélération maximum sur la trajectoire du mouvement d'avance.

**8.** Procédé suivant l'une des revendications précédentes, **caractérisé en ce que**

- au moyen de l'unité (2) de commande, on fixe, en fonction de la description géométrique, une troisième valeur maximum d'un troisième paramètre cinématique concernant le mouvement d'avance le long du tronçon et
- on effectue la planification du mouvement d'avance le long du tronçon en tenant compte de la troisième valeur maximum.

**9.** Procédé suivant la revendication 8,
**caractérisé en ce que**
la troisième valeur maximum est donnée par un à-coup maximum sur la trajectoire du mouvement d'avance.

**10.** Dispositif de commande d'une machine-outil (1), ayant au moins deux axes, dans lequel le système de commande a une unité (2) de commande, qui est agencée pour commander, suivant une trajectoire définie par une description géométrique donnée à l'avance, la machine-outil (1) pour l'exécution d'un mouvement d'avance, par un mouvement simultané au moins par tronçon d'un premier axe (X1, X2, X3) et d'un deuxième axe (X1, X2, X3) de la machine-outil (1), dans lequel l'unité (2) de commande est agencée,

- pour fixer, en fonction de la description géométrique, une première valeur maximum d'un premier paramètre cinématique concernant le mouvement d'avance le long du tronçon de la trajectoire ;
- planifier le mouvement d'avance le long du tronçon en tenant compte de la première valeur maximum ;
- commander le premier axe (X1, X2, X3) et le deuxième axe (X1, X2, X3) pour l'exécution du mouvement d'avance suivant le mouvement planifié le long du tronçon ;

**caractérisé en ce que**
l'unité (2) de commande est agencée,

- pour fixer, en fonction de la description géométrique, une deuxième valeur maximum d'un deuxième paramètre cinématique concernant le mouvement d'avance le long du tronçon ;
- effectuer la planification du mouvement d'avance le long du tronçon en tenant compte de la deuxième valeur maximum ;
- déterminer une plage de valeurs pour la première valeur maximum, en fonction d'une première valeur limite cinématique donnée à l'avance pour le premier axe (X1, X2, X3) ;
- déterminer une première plage de valeurs pour la deuxième valeur maximum, en fonction de la première valeur limite cinématique pour le premier axe (X1, X2, X3), et

- pour la fixation de la première valeur maximum et de la deuxième valeur maximum, fixer, en fonction de la description géométrique, un paramètre de répartition, par lequel on définit tant la première valeur maximum qu'également la deuxième valeur maximum de manière univoque dans la première plage de valeurs respective.

11. Machine-outil, qui est réalisée en ayant au moins deux axes et qui comporte un système de commande suivant la revendication 10.

12. Programme d'ordinateur ayant des instructions, qui, lorsqu'elles sont réalisées par un système de commande suivant la revendication 10, font que le système de commande effectue un procédé suivant l'une des revendications 1 à 9.

13. Support de mémoire, déchiffrable par ordinateur, qui met en mémoire un programme d'ordinateur suivant la revendication 12.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008125656 A1
- DE 102006030177 A1
- EP 3623887 A1